# EUROPEAN PATENT SPECIFICATION

(11) **EP 1 561 630 B1**
(45) Date of publication and mention of the grant of the patent: **25.04.2007**
(21) Application number: 02783108.0
(22) Date of filing: 13.11.2002
(51) Int. Cl.: B60K 35/00, B60R 11/02

(54) **INFORMATION DISPLAY SYSTEM**
INFORMATIONSANZEIGESYSTEM
SYSTEME D'AFFICHAGE D'INFORMATIONS

(43) Date of publication of application: 10.08.2005
(73) Proprietor: Delgado Acarreta, Raul, 31500 Tudela (ES)
(72) Inventor: Delgado Acarreta, Raul, 31500 Tudela (ES)
(74) Representative: Elzaburu Marquez, Alberto
(86) International application number: PCT/ES2002/000528
(87) International publication number: WO 2004/043726

(56) References cited:
- EP-A- 0 352 153
- WO-A-01/60650
- WO-A-02/03712

## Description

### SUBJECT OF THE INVENTION

The present invention relates in general to a system which displays via a screen, information data which is displayed simultaneously on a screen corresponding to an electronic device.

More specifically, the present invention relates to a system which includes a screen on which there can be displayed visually information data which also appears simultaneously on a screen of a portable electronic device when a user operates this device, and consequently the user can carry out simultaneously another task which requires him to keep looking in a predetermined field of vision, and to pay continual attention to this task.

It should be noted that the information data can be selected by the user of the portable electronic device.

### STATE OF THE ART

At present, in a large number of countries, the standards relating to travel of motor cars prohibit the use of mobile telephony devices or communication systems whilst driving. In Spain, for example, this prohibition is governed by Article 11(3) of the LAW ON TRAFFIC, TRAVEL OF MOTOR VEHICLES AND ROAD SAFETY, Royal Legislative Decree 339/1990 of 2^{nd} March (Spanish Official Gazette of 14^{th} March).

According to the state of the art, the existence is known of systems which attempt to solve the problem of not using devices of this type whilst driving a motor car. Thus, some vehicles have means which provide facilities to operate some portable electronic devices, such as a mobile telephone, whilst the motor car is being driven.

Some steering wheels incorporate some type of push button and/or set of push buttons, by means of which various operations can be carried out corresponding to the electronic devices which the motor car contains as accessories. This type of steering wheel is known as a multi-purpose steering wheel.

Some of the functions which the driver of the motor car can carry out by means of the multi-purpose steering wheel are taking an incoming call, ending a call, raising or lowering the volume of audio equipment, etc. It should be noted that the mobile telephony telephone is incorporated in the vehicle as an accessory, and consequently another mobile telephone which the driver can use outside the vehicle cannot be operated by means of the multi-purpose steering wheel.

It should be noted that the driver carries out the above-described operations without removing his hands from the steering wheel of the vehicle, i.e. the driver uses any finger to press any button. In addition, it should be noted that if the driver wishes to read the information data displayed on the screen of the mobile telephony telephone, he must take his eyes off the road on which the vehicle is travelling.

However, when the driver wishes to carry out other operations involving the mobile telephony telephone, and when these cannot be commanded from the means incorporated in the steering wheel, at the same time as he is driving the driver must take one hand off the steering wheel, and simultaneously stop looking at the road on which the vehicle is travelling. As a result, the driver endangers himself and other users of the road on which the vehicle is travelling.

Mobile telephony telephone operations which require the driver to take at least one hand off the steering wheel and/or simultaneously to take his eyes off the road are: looking at the message box, looking up a number in the phonebook, reading the telephone number corresponding to an incoming call, etc.

In addition, if whilst driving the driver wishes to operate a mobile telephone which is not an accessory of the vehicle, he must take at least one hand off the steering wheel so as to take hold of the telephone, and simultaneously take his eyes off the road on which the vehicle is travelling, in order to operate the telephone.

It will be appreciated that in both circumstances, the driver is not in a position to control the vehicle whilst he is simultaneously operating a mobile telephony telephone, since he is not keeping his eyes on the road and his attention continually on his driving.

Consequently, it is necessary to develop a system which makes it possible to display visually on a screen of the system the information data selected by a user of an electronic device, which data appears on a screen of the electronic device whilst the user is simultaneously driving a motor car, such that the driver can keep his hands on the steering wheel, his eyes on the road on which the vehicle is travelling, and his attention continually on his driving.

As a result, the driver is at all times in a position to control the motor car which he is driving, whilst he is operating the electronic device, and is not endangering himself and other potential users of the road on which he is travelling.

A system for displaying information on a first screen connected to a programmable logic control means which in turn is connected to an electronic device which includes a second screen via a data input / output means, wherein the first screen displays the same information data as displayed by the second screen is generally known in the prior art.

### CHARACTERIZATION OF THE INVENTION

Via a data input/output means, the system according to the present invention displays to a user of a motor car information data on a first screen connected to a programmable logic control means, which in turn is connected to an electronic device such as a mobile telephone, which includes a second screen, via a data input/output means such that the first screen displays visually inverted the same information data as that displayed by the second screen, so that the driver of the motor car can read the image obtained from the first screen, reflected in the front windscreen of the vehicle, whilst simultaneously paying attention to his driving.

Thus, the first screen displays the same information data as that displayed by the second screen, and this data can be seen directly by the driver, since the data is reflected by the front windscreen of the vehicle. Consequently, the first screen displays the information data inverted. The reflected image is therefore integrated in the field or cone of vision of the driver, and thus not separately from the view of the road on which the vehicle is travelling.

One object of the invention is to prevent the user, i.e. the driver of the vehicle, from diverting his attention from the traffic whilst he is simultaneously operating an electronic device which displays visually information data selected by the user and/or received from a telephony operator. As a result, the driver is at all times in a position to control both the motor car he is driving and the portable electronic device. This therefore reduces the risk of accidents caused by the driver handling the portable electronic device whilst he is driving.

Another object of the invention is to prevent the driver from taking his hands off the steering wheel and his eyes off the road when he is operating the portable electronic device whilst he is driving, and, additionally, the driver requires less attention and concentration to operate the electronic device manually by means of data input.

Another object of the invention is to assist compliance with traffic travel standards.

Another object of the invention is to use a low energy-consumption screen, such as a liquid crystal (LCD) screen, an electro-luminescence screen, a plasma screen, or the like.

Another object of the invention is to use a data input means which is located near to the driver, and which is simple to handle in order to facilitate the task of selection of the different functions, menus, etc. In addition, the data input means is preferably connected to the remainder of the system in a wireless manner, thus avoiding the disadvantage of wiring, preferably by using electromagnetic signals such as infrared rays.

Another object of the invention is to develop a simple and reduced-cost system, which can be used in conjunction with a portable electronic device such as a mobile telephone, or portable computer of the type habitually used by the driver of the vehicle, outside this vehicle.

### BRIEF DESCRIPTION OF THE FIGURES

A more detailed explanation of the invention is provided in the following description based on the attached figures, in which:

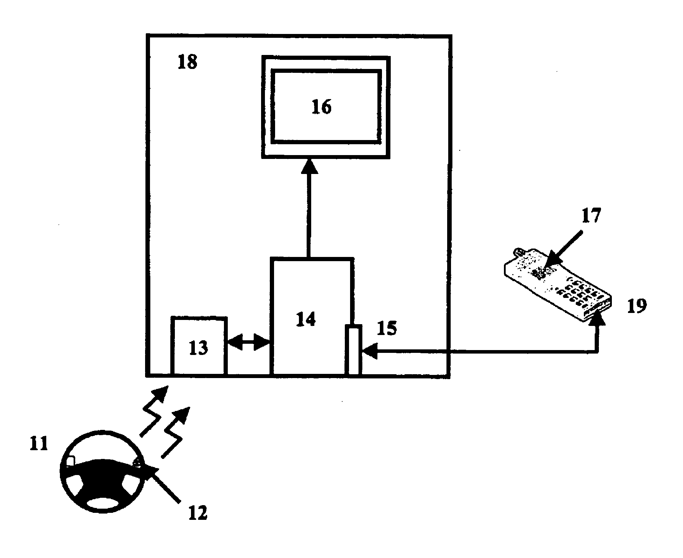

figure 1 displays as a block diagram a system according to the invention for displaying information.

### DESCRIPTION OF THE INVENTION

The system in figure 1 for displaying information data visually comprises a data input means 12, which communicates by means of electromagnetic signals, i.e. in a wireless manner, with an equipment terminal means 18. The equipment terminal 18 includes a receiver means 13, which receives these signals and conveys them to a programmable logic control means 14, which in turn is connected to an electronic device 19 such as a mobile telephone or portable computer, via a data input/output means 15. In addition, the programmable logic control means 14 is also connected to a first illuminated screen 16, which is designed to display visually information data corresponding to information data which is displayed visually on a second screen 17 included in the portable electronic device 19.

Functionally, the data input means 12 can preferably be located near to the driver of a motor car, for example in the steering wheel 11. The input means 12 includes a set of control elements such as keys or push buttons corresponding to numerical and alphanumerical characters and function elements, such as vertical displacement upwards and downwards, raising and lowering of volumes, changes of menu, starting of calls, ending of calls, or the like. In addition, some keys can be associated with various characters and/or functions.

Furthermore, the data input means 12 can comprise a touch screen, such that when a predetermined area of the screen 16 is touched, the corresponding order is executed.

In both cases, the data input means 12 permits quick and easy changeover in manual mode from one piece of information displayed on the portable device 19, to another, such that the driver does not cease paying attention to his driving whilst he is being displayed simultaneously the information on the first screen 16.

The data input means 12 has an operating mode which requires little attention by the driver, and can be operated by one finger of one hand, for example by the thumb. When a key is pressed, the corresponding electromagnetic control signal is generated, such as an infrared signal, which is transmitted from an emission means to the receiver 13 of the equipment terminal 18.

The signal received by the receiver 13 is converted into the corresponding electric control signal before being conveyed to the programmable logic controller 14 based in a programming means such as a computer which uses the signal received in order to control the mobile telephone 19 by means of graphical representation, such as a cursor displayed on the second screen 17 of the mobile telephone 16.

The computer 14 is designed to store and execute a communication program by means of which it can operate the mobile telephone 16, by exchanging data via the data input/output means 12. Thus, according to the signals generated by the driver by means of the data input means 12 and the corresponding program relating to the mobile telephone 19, the computer 14 can make the different operations of the mobile telephone 19 function, for example it can examine the telephone phonebook, initiate an outgoing call by entering a telephone number, or select a number stored in the phonebook, read the information data corresponding to an incoming call, etc.

Consequently, the computer 14 executes a predetermined program associated with the mobile telephone 16 connected to the equipment terminal 18 via the data input/output means 12. Via the data input means 12, the driver controls the functioning of any of the operations specific to the mobile telephone 19, which operates as a radio emitter/receiver.

Thus, by pressing the push buttons, the driver can select a predetermined operation of the mobile telephone 19, for example by moving the cursor displayed on the second screen 17 through the different options of the menu of the mobile telephone 19 and selecting an operating mode. It should be noted that the driver does not need to remove either hand from the steering wheel 11 in order to operate the mobile telephone 19.

Thus, the computer 14 is also designed to store and execute a predetermined program for reproduction of information data, by means of which it can reproduce simultaneously on the first screen 16 the information data which may be displayed on the second screen 17. In other words, both the first 16 and second 17 screens display the same information data simultaneously.

The first screen 16 is located on the dashboard of the vehicle, oriented toward the front windscreen of the vehicle such that the driver cannot read the information displayed on this first screen 16 whilst he is driving.

However, the driver can read an image which is a reflection of the information data displayed on the first screen 16. Consequently, the information data which appears on the first screen 16 is inverted, i.e. so that it can be read directly on the front windscreen of the vehicle.

Thus, the driver can read the information displayed on the first screen 16 and does not look away from the road at any time. In order for the reflection generated on the front windscreen to be able to be read by the driver, the first screen 16 forms a predetermined angle with the windscreen. It should be noted that the reflection formed on the front windscreen at no time obscures the road on which the motor car is travelling.

As a result, at the same time that the driver is driving the vehicle, he can read the information data displayed on the second screen 17 of the mobile telephone 19, and, in addition, does not look away from the road.

To summarize, by means of the reproduction program, the computer 14 acquires the information data displayed visually on the second screen 17 of the mobile telephone 19 and conveys it to the first screen 16 of the equipment terminal 18, such that the information data is displayed inverted on this first screen 16, so that the driver can read the information reflected by the front windscreen.

For example, when an incoming call is received by the mobile telephone 19, by means of the communication program the computer 14 acquires the information relating to the incoming call which is being displayed visually on the second screen 17, for example the caller's number, or if this person has a name allocated to him, this name is displayed, corresponding to the number calling, and by means of the reproduction program this information is displayed on the first screen 16. The driver can then read the information relating to the call received, and can thus decide whether to answer or not. If the driver decides to take the call, he can press the corresponding key of the data input means 12 located on the steering wheel 11. Thus, at no time does the driver let go of the steering wheel, or look away from the road in order to attend to the call he is receiving.

It should be noted that via the input means 12, the driver can move the cursor displayed on the first screen 16. At present, the cursor has different forms based on the type of mobile telephone 19.

The data input means 12 is secured to the steering wheel 11, for example by a mechanical securing means, such as a retention clamp, which is not displayed in figure 1.

The equipment terminal 18 also includes acoustic warning means which can generate a voice message corresponding to an incoming call, to a function selected, or the like. In addition, the equipment terminal 18 can include means relating to hands-free equipment, or, where appropriate, can be used together with hands free equipment which is included as an accessory in the vehicle.

The equipment terminal 18 is also designed to store and execute the corresponding communication program by means of the computer 14, in order to communicate with a telephone incorporated in the vehicle as an accessory.

The computer 14 is connected by means of a connection to the first screen 16. The connection can be a physical connection, for example by means of a cable, or a connection without cables, i.e. a wireless connection, via electromagnetic signals such as radio-electric signals, infrared signals, or the like.

## Claims

1. A system for displaying information on a first screen (16) connected to a programmable logic control means (14), which in turn is connected to an electronic device (19), which includes a second screen (17), via a data input/output means (15), wherein the first screen (16) displays inverted the same information data as that displayed by the second screen (17), such that a passenger in a motor vehicle can read the image obtained from the first screen (16), reflected in a windscreen of the vehicle.

2. The system as claimed in claim 1 for displaying information; the motor vehicle is a motor car.

3. The system as claimed in claim 2 for displaying information; the passenger is the driver of the motor car.

4. The system as claimed in claim 2 for displaying information; the windscreen is the front windscreen.

5. The system as claimed in claims 3 and 4 for displaying information; the first screen (16) is located on the dashboard of the motor car, such that the driver cannot read the information data displayed by the first screen (16) whilst he is driving.

6. The system as claimed in claim 5 for displaying information; the first screen (16) forms a predetermined angle with the front windscreen.

7. The system as claimed in claims 1 and 6 for displaying information; the electronic device (19) is a portable electronic device.

8. The system as claimed in claim 7 for displaying information; the portable electronic device (19) is a mobile telephone.

9. The system as claimed in claim 1 for displaying information; wherein the programmable logic control means (14) is a computer.

10. An equipment terminal (18), including a system as claimed in claim 1; which includes the first screen (16) connected to the programmable logic control means (14), which in turn is connected to the electronic device (19) via the data input/output means (15).

11. The equipment terminal (18) as claimed in claim 10; which also includes a receiver means (13) which is designed to receive radio-electric signals emitted from an emission means which is included in the data input means (12).

12. The equipment terminal (18) as claimed in claim 11; the radio-electric signals emitted are infrared rays.

13. The equipment terminal (18) as claimed in claim 11; which also includes an acoustic warning means which is designed to generate a voice message corresponding to the information displayed visually on the first screen (16).

14. The equipment terminal (18) as claimed in claim 11; the data input means (12) includes the emission means and also a plurality of keys which are designed to be activated using at least one finger of one hand.

15. The equipment terminal (18) as claimed in claim 14, in which the data input means (12) is located in the steering wheel (11) of the motor car.

16. The equipment terminal (18) as claimed in claim 14, in which the data input means (12) includes a touch screen to generate an order corresponding to a predetermined area of this screen, such that an infrared signal is generated, which is emitted by the emission means.

## Patentansprüche

1. System zum Anzeigen von Information auf einem ersten Bildschirm (16), der mit einer programmierbaren Logiksteuervorrichtung (14) verbunden ist, die ihrerseits über eine Daten-Eingabe-/Ausgabevorrichtung (15) mit einer elektronischen Vorrichtung (19) verbunden ist, welche einen zweiten Bildschirm (17) aufweist, wobei der erste Bildschirm (16) die gleichen Informationsdaten, die von dem zweiten Bildschirm (17) angezeigt werden, invertiert derart anzeigt, dass ein Insasse eines Kraftfahrzeugs das von dem ersten Bildschirm (16) her erhaltene Bild an der Windschutzscheibe des Fahrzeugs reflektiert lesen kann.

2. Informationsanzeigesystem nach Anspruch 1, bei dem das Kraftfahrzeug ein Personenkraftfahrzeug ist.

3. Informationsanzeigesystem nach Anspruch 2, bei dem der Insasse der Fahrer des Personenkraftfahrzeugs ist.

4. Informationsanzeigesystem nach Anspruch 2, bei dem die Windschutzscheibe die vordere Windschutzscheibe ist.

5. Informationsanzeigesystem nach Anspruch 3 und 4, bei dem der erste Bildschirm (16) am Armaturenbrett des Personenkraftfahrzeugs derart angeordnet ist, dass der Fahrer die auf dem ersten Bildschirm (16) angezeigten Informationsdaten nicht lesen kann, während er fährt.

6. Informationsanzeigesystem nach Anspruch 5, bei dem der erste Bildschirm (16) einen vorbestimmten Winkel mit der vorderen Windschutzscheibe bildet.

7. Informationsanzeigesystem nach Anspruch 1 und 6, bei dem die elektronische Vorrichtung (19) eine tragbare elektronische Vorrichtung ist.

8. Informationsanzeigesystem nach Anspruch 7, bei dem die tragbare elektronische Vorrichtung (19) ein Mobiltelefon ist.

9. Informationsanzeigesystem nach Anspruch 1, bei dem die programmierbare Logiksteuervorrichtung (14) ein Computer ist.

10. Endgerät (18) mit einem System nach Anspruch 1, das den ersten Bildschirm (16) aufweist, der mit der programmierbaren Logiksteuervorrichtung (14) verbunden ist, die ihrerseits über die Daten-Eingabe-/Ausgabevorrichtung (15) mit der elektronischen Vorrichtung (19) verbunden ist.

11. Endgerät (18) nach Anspruch 10, ferner mit einer Empfängervorrichtung (13) zum Empfang von Funksignalen, die von einer in der Dateneingabevorrichtung (12) enthaltenen Sendevorrichtung ausgegeben werden.

12. Endgerät (18) nach Anspruch 11, bei dem die ausgegebenen Funksignale Infrarotstrahlen sind.

13. Endgerät (18) nach Anspruch 11, ferner mit einer akustischen Warnvorrichtung, die zum Erzeugen einer Sprechmeldung ausgebildet ist, die der auf dem ersten Bildschirm (16) visuell angezeigten Information entspricht.

14. Endgerät (18) nach Anspruch 11, bei dem die Dateneingabevorrichtung (12) die Sendevorrichtung enthält und ferner mehrere Tasten aufweist, die durch mindestens einen Finger einer Hand aktivierbar sind.

15. Endgerät (18) nach Anspruch 14, bei dem die Dateneingabevorrichtung (12) in dem Steuerrad (11) des Personenkraftfahrzeugs angeordnet ist.

16. Endgerät (18) nach Anspruch 14, bei dem die Dateneingabevorrichtung (12) einen Touch Screen aufweist, um einen einem vorbestimmten Bereich dieses Screens entsprechenden Befehl derart zu erzeugen, dass ein Infrarotsignal erzeugt wird, das von der Sendevorrichtung gesendet wird.

## Revendications

1. Système permettant d'afficher des informations sur un premier écran (16) connecté à un moyen de commande de logique programmable (14), qui est à son tour connecté à un dispositif électronique (19), qui comprend un second écran (17), via des moyens d'entrée/sortie de données (15), dans lequel le premier écran (16) affiche de manière inversée les mêmes données d'informations que celles affichées par le second écran (17), de telle sorte qu'un passager d'un véhicule automobile puisse lire l'image obtenue du premier écran (16), reproduite sur un pare-brise du véhicule.

2. Système selon la revendication 1 permettant d'afficher des informations; le véhicule automobile est une voiture motorisée.

3. Système selon la revendication 2 permettant d'afficher des informations; le passager est le conducteur de la voiture motorisée.

4. Système selon la revendication 2 permettant d'afficher des informations ; le pare-brise est le pare-brise avant.

5. Système selon les revendications 3 et 4 permettant d'afficher des informations ; le premier écran (16) se trouve sur le tableau de bord de la voiture motorisée, de telle sorte que le conducteur ne peut pas lire les données d'informations affichées par le premier écran (16) alors qu'il conduit.

6. Système selon la revendication 5 permettant d'afficher des informations ; le premier écran (16) forme un angle prédéterminé avec le pare-brise avant.

7. Système selon les revendications 1 et 6 permettant d'afficher des informations ; le dispositif électronique (19) est un dispositif électronique portatif.

8. Système selon la revendication 7 permettant d'afficher des informations ; le dispositif électronique portatif (19) est un téléphone mobile.

9. Système selon la revendication 1 permettant d'afficher des informations ; dans lequel moyen de commande de logique programmable (14) est un ordinateur.

10. Terminal d'équipement (18) comprenant un système selon la revendication 1 ; qui comprend le premier écran (16) connecté au moyen de commande de logique programmable (14), qui est à son tour connecté au dispositif électronique (19) via les moyens d'entrée/sortie de données (15).

11. Terminal d'équipement (18) selon la revendication 10; qui comprend également des moyens récepteurs (13) qui sont conçus pour recevoir des signaux radioélectriques émis par des moyens émetteurs qui sont inclus dans les moyens d'entrée de données (12).

12. Terminal d'équipement (18) selon la revendication 11 ; les signaux radioélectriques émis sont des rayons infrarouges.

13. Terminal d'équipement (18) selon la revendication 11; qui comprend également des moyens d'avertissement acoustiques qui sont conçus pour générer un message vocal correspondant aux informations affichées visuellement sur le premier écran (16).

14. Terminal d'équipement (18) selon la revendication 11 ; les moyens d'entrée de données (12) comprennent les moyens émetteurs et également une pluralité de clés qui sont conçues pour être activées à l'aide d'au moins un doigt de la main.

15. Terminal d'équipement (18) selon la revendication 14 ; dans lequel les moyens d'entrée de données (12) se trouvent dans le volant de direction (11) de la voiture motorisée.

16. Terminal d'équipement (18) selon la revendication 14 ; dans lequel les moyens d'entrée de données (12) comprennent un écran tactile pour générer un ordre correspondant à une zone prédéterminée de cet écran, de telle sorte qu'un signal infrarouge soit généré, qui est émis par les moyens émetteurs.
